# EUROPÄISCHE PATENTSCHRIFT

(11) **EP 1 175 514 B1**
(45) Veröffentlichungstag und Bekanntmachung des Hinweises auf die Patenterteilung: **25.06.2003**
(21) Anmeldenummer: 00916956.6
(22) Anmeldetag: 16.03.2000
(51) Int. Cl.: C22B 34/12, C01G 23/053

(54) **HERSTELLUNG VON TITANDIOXID**
PRODUCTION OF TITANIUM DIOXIDE
PREPARATION DE DIOXYDE DE TITANE

(30) Priorität: 01.04.1999 DE 19915170
(43) Veröffentlichungstag der Anmeldung: 30.01.2002
(73) Patentinhaber: Sachtleben Chemie GmbH, 47198 Duisburg (DE)
(72) Erfinder: GESENHUES, Ulrich, D-47441 Moers (DE); OPTEHOSTERT, Regina, D-47441 Moers (DE); PHILIPPS, Klaus, D-47228 Duisburg (DE)
(74) Vertreter: Uppena, Franz, Dr.
(86) Internationale Anmeldenummer: EP0002316
(87) Internationale Veröffentlichungsnummer: WO00060130

(56) Entgegenhaltungen:
- WO-A-91/17956
- WO-A-96/10096
- GB-A- 351 841
- DATABASE WPI Section Ch, Week 199725 Derwent Publications Ltd., London, GB; Class E32, AN 1997-279470 XP002142309 & RU 2 068 393 C (AS USSR URALS METAL INST), 27. Oktober 1996 (1996-10-27)

## Beschreibung

Die Erfindung betrifft die Herstellung von Titandioxid nach dem Sulfatverfahren, bei dem aufgemahlene titanhaltige Rohstoffe mit 80 bis 94 %-iger Schwefelsäure aufgeschlossen werden, der gebildete feste, lösbare Aufschlußkuchen in Wasser oder verdünnter Schwefelsäure gelöst wird, die ungelösten Rückstände abgetrennt werden und, gegebenenfalls nach Kristallisation von Eisensulfatheptahydrat, das Titanylsulfat zu Titanoxyhydrat hydrolysiert und das Titanoxyhydrat nach Filtration und Waschen durch Kalzinieren in Titandioxid überführt wird.

Das Sulfatverfahren geht von gemahlenem Ilmenit oder feingemahlener Titanschlacke aus, die mit ca. 90 %-iger Schwefelsäure aufgeschlossen werden. Zu diesem Zweck wird das Aufschlußgemisch aus titanhaltigem Rohstoff und Schwefelsäure auf eine Temperatur von 90 bis 150°C erwärmt. Nach Erreichen der Starttemperatur springt die Aufschlußreaktion an, und das Aufschlußgemisch erhitzt sich auf eine Temperatur von 170 bis 220°C, die über eine längere Zeit aufrechterhalten bleibt. Dabei verdampft das meiste Wasser, und der entstandene feste, poröse, lösliche Aufschlußkuchen wird nach einer Reifezeit von bis zu mehreren Stunden in Wasser oder verdünnter Schwefelsäure gelöst und die Lösung geklärt. Die beim Aufschluß von titanhaltigen Rohstoffen anfallenden festen, nicht aufgeschlossenen Rückstände enthalten bis zu 80 Gew.-% Titandioxid mit der Folge, daß der Aufschluß der titanhaltigen Rohstoffe stets unter 100 % liegt. Das Ausbringen an Titandioxid läßt sich zwar durch die eingesetzten Rohstoffe, durch die Apparateausstattung und durch die Prozeßfuhrung beeinflussen, unter wirtschaftlichen Gesichtspunkten läßt sich jedoch immer nur ein Ausbringen an Titandioxid von 85 bis bestenfalls 93 % bei Schlacke und 96 % bei Ilmenit als Rohstoff erreichen.

Die durch den Aufschluß entstandenen Rückstände müssen deponiert oder zu anderen Produkten, die beispielsweise für die Stahl- und Bauindustrie geeignet sind, umgearbeitet werden. Für derartige Produkte läßt sich jedoch nicht der gleiche Marktpreis wie für Titandioxid selbst erzielen.
In den Veröffentlichungen XP002142309 und GB 351841 A wird das Erhitzen (reduktives Schmelzen, bzw. Sintern) von titanhaltigen Rohstoffen mit Zusätzen (Metalloxide, bzw. MgO) beschrieben, wobei Temperaturen über 1400 °C erreicht werden.

Es ist die Aufgabe der vorliegenden Erfindung, bei der Herstellung von Titandioxid nach dem Sulfatverfahren, den Aufschlußgrad von Titandioxid in titanhaltigen Rohstoffen zu verbessern, insbesondere für solche titanhaltigen Rohstoffe, die zwar einen relativ hohen Titangehalt aufweisen und deshalb einen höheren spezifischen Preis für den Titandioxidanteil darin haben, bei denen aber der Aufschlußgrad besonders weit unter 100 % bleibt.

Die Lösung dieser Aufgabe besteht darin, daß den aufzumahlenden titanhaltigen Rohstoffen oder den aufgemahlenen titanhaltigen Rohstoffen oder der Schwefelsäure Metalloxide, -hydroxide, -halogenide, oder -salze der Sauerstoffsäuren der Elemente der 4., 5. und 7. Hauptgruppe des Periodensystems der Elemente sowie Metallsalze organischer Carbonsäuren einzeln oder zu mehreren im Gemisch oder in Mischverbindungen zugesetzt werden und der Schwefelsäure aufschluß anschließend durchgeführt wird.

Zweckmäßigerweise werden die Zusätze in stückiger, pulvriger, suspendierter oder gelöster Form zugegeben.

Eine vorzugsweise Ausgestaltung des erfindungsgemäßen Verfahrens besteht darin, daß die Zusätze in einer Menge von 0,2 bis 10 Gew.-%, vorzugsweise 0,5 bis 4 Gew.-%, bezogen auf den titanhaltigen Rohstoff, zugegeben werden.

Die 80 bis 94 %-ige Schwefelsäure wird entsprechend dem Stand der Technik durch Mischen von 20 bis 94 %-iger Säure mit 80 bis 99 %-iger Säure oder Oleum hergestellt.

Die Menge der einzubringenden Zusätze beeinflußt in einem weiten Bereich nur den Aufschlußgrad, aber keine anderen Eigenschaften wie z. B. die Lösegeschwindigkeit des Aufschlußkuchens oder etwa bei Zusatz zur Mahlung der titanhaltigen Rohstoffe die Feinheit des Mahlprodukts. Allerdings werden die Zusätze beim Aufschluß in lösliche Metallsulfate umgewandelt und können eine Modifizierung der nachfolgenden Hydrolyse des Titanylsulfats und der Aufarbeitung der vom Titanoxidhydrat abgetrennten Schwefelsäure erforderlich machen. Die Wirkung der Zusätze auf den Aufschlußgrad wird durch ihre Menge und bei festen Zusätzen auch durch ihre Feinheit bestimmt.

Die Erfindung ist nachfolgend anhand von Ausführungsbeispielen näher erläutert.

### 1. Ausführungsbeispiel (Stand der Technik)

Auf einer Heizplatte werden in einem Glasgefäß 135 g 80 %-ige Schwefelsäure vorgewärmt, der 100 g auf 98 % feiner als 40 um gemahlene Sorelschlacke sowie 31 ml Oleum der rechnerischen Konzentration 105,1 %-ige H₂SO₄ zugegeben werden. Nach der Zugabe von Oleum beginnt die Mischung zu reagieren, schäumt auf und erhitzt sich in 6 Minuten auf eine Temperatur von 195°C, die 15 Minuten lang aufrechterhalten bleibt. Nach einer Reifezeit von 3 Stunden werden die Metallsulfate im Kuchen innerhalb von 6 Stunden in verdünnter Schwefelsäure aufgelöst und der Aufschlußrückstand geflockt. Die Ausbeute des Aufschlusses an Titandioxid beträgt 86,5 %.

### 2. Ausführungsbeispiel

Vor dem Aufschluß gemäß dem 1. Ausführungsbeispiel werden der gemahlenen Sorelschlacke 2 Gew.-% Magnesiumoxid der Feinheit gemäß DIN 70 zugemischt. Nach Ablauf der im 1. Ausführungsbeispiel beschriebenen Reaktion ergibt sich eine Ausbeute des Aufschlusses an Titandioxid von 89 %.

### 3. Ausführungsbeispiel

Es werden 100 g gemahlene Sorelschlacke gemäß dem 1. Ausführungsbeipiel behandelt, wobei jedoch der Schwefelsäure 2 Gew.-% Magnesiumchlorid, bezogen auf den titanhaltigen Rohstoff, als wäßrige Lösung zugegeben sind. Die Aufschlußausbeute an Titandioxid beträgt 88,5 %.

### 4. Ausführungsbeipiel

Der gemäß dem 1. Ausführungsbeipiel behandelten Sorelschlacke wird nach deren Mahlung 1 Gew.-% Aluminiumhydroxid mit einer mittleren Teilchengröße d₅₀ von 50 µm zugegeben. Es ergibt sich eine Ausbeute des Aufschlusses an Titandioxid von 90 %.

Aus der EP-B-0 147 608 ist ein Verfahren zur Herstellung von Titandioxid durch den kontinuierlichen autothermen Aufschluß von titanhaltigen Rohstoffen mit Schwefelsäure bekannt. Dabei bildet sich ein fester, relativ gut löslicher Aufschlußkuchen, aus dem die Metallsulfate mit Wasser oder verdünnter Schwefelsäure gelöst werden. Die ungelösten Rückstände werden abgetrennt, und nach einer Kristallisation von Eisensulfat-Heptahydrat wird das Titanylsulfat zu Titanoxidhydrat hydrolysiert und dann zu Titandioxid kalziniert. Den titanhaltigen Rohstoffen werden 80 bis 88 %-ige Schwefelsäure und Metallsulfate zugegeben. Vor Reaktionsbeginn beträgt die Menge der Metallsulfate 2 bis 25 %, wobei als Metallsulfate der bei der Filtration eingedampfter TiO₂-Dünnsäure anfallende Filterkuchen eingesetzt wird. Auf diese Weise wird für den Aufschluß der titanhaltigen Rohstoffe Schwefelsäure mit einer geringeren Konzentration benötigt.

## Patentansprüche

1. Herstellung von Titandioxid nach dem Sulfatverfahren, bei dem aufgemahlene titanhaltige Rohstoffe mit 80 bis 94 %-iger Schwefelsäure aufgeschlossen und aus dem entstandenen festen, lösbaren Aufschlußkuchen die Metallsulfate mit Wasser oder verdünnter Schwefelsäure ausgewaschen werden, die ungelösten Rückstände abgetrennt werden und Titanylsulfat hydrolysiert und das Titanoxyhydrat nach Filtration und Waschen durch Kalzinieren in Titandioxid überführt wird, **dadurch gekennzeichnet, daß** dem aufzumahlenden titanhaltigen Rohstoff oder dem aufgemahlenen titanhaltigen Rohstoff oder der Schwefelsäure Metalloxide, Metallhydroxide, Metallhalogenide, Metallsalze der Sauerstoffsäuren der Elemente der 4., 5. und 7. Hauptgruppe des Periodensystems, und Metallsalze organischer Carbonsäuren einzeln oder im Gemisch oder in Form von Mischverbindungen zugesetzt werden und der Schwefelsäure aufschluß unschließend durchgeführt wird.

2. Verfahren nach Anspruch 1, **dadurch gekennzeichnet, daß** die zugesetzten Substanzen als Stücke, Pulver, Suspension oder Lösung zugesetzt werden.

3. Verfahren nach einem der Ansprüche 1 und 2, **dadurch gekennzeichnet, daß** die Zusätze 0,2 bis 10 Gew.-%, vorzugsweise 0,5 bis 4 Gew.-%, bezogen auf die titanhaltigen Rohstoffe, betragen.

## Claims

1. Preparation of titanium dioxide by the sulfate process, in which ground titaniferous raw materials are digested with from 80 to 94% sulfuric acid, and the metal sulfates are leached with water or dilute sulfuric acid from the resulting solid soluble digestion cake, the undissolved residues are separated, titanyl sulfate is hydrolysed and the titanium oxyhydrate is converted into titanium dioxide by calcining following filtration and washing, **characterised in that** metal oxides, metal hydroxides, metal halides, metallic salts of the oxoacids of the elements in Main Groups 4, 5 and 7 of the Periodic Table, and metallic salts of organic carboxylic acids, either separately or in mixture or in the form of mixed compounds, are added to the titaniferous raw material which is to be ground or to the ground titaniferous raw material or to the sulfuric acid, and the sulfuric acid digestion is carried out subsequently.

2. Process according to Claim 1, **characterised in that** the added substances are added as pieces, as powder, as a suspension or as a solution.

3. Process according to one of Claims 1 and 2, **characterised in that** the additions amount to from 0.2 to 10 wt.%, preferably 0.5 to 4 wt.%, in relation to the titaniferous raw materials.

## Revendications

1. Préparation de dioxyde de titane selon le procédé au sulfate, dans lequel des matières premières broyées contenant du titane sont décomposées avec de l'acide sulfurique à 80 - 94 % et dans lequel les sulfates métalliques sont extraits à partir du gâteau de décomposition solide, soluble, par lavage avec de l'eau ou de l'acide sulfurique dilué, les résidus insolubles sont séparés et le sulfate de titanyle est hydrolysé et l'oxyhydrate de titane est converti, après filtration et lavage, par calcination en dioxyde de titane, lequel procédé est **caractérisé par le fait que** l'on ajoute à la matière première à broyer contenant du titane ou à la matière première broyée contenant du titane ou à l'acide sulfurique des oxydes métalliques, des hydroxydes métalliques, des halogénures métalliques, des sels métalliques ou des oxyacides des éléments du quatrième, cinquième et septième groupe principal du système périodique, et des sels métalliques d'acides carboxyliques organiques seuls ou sous forme de mélange, ou sous forme de composés mixtes et que l'on met en suite en oeuvre la décomposition par l'acide sulfurique.

2. Procédé selon la revendication 1, **caractérisé par le fait que** les substances ajoutées sont ajoutées sous forme de morceaux, de poudre, de suspension ou de solution.

3. Procédé selon l'une des revendications 1 et 2, **caractérisé par le fait que** les additifs représentent de 0,2 à 10 % en poids, de préférence de 0,5 à 4 % en poids, rapporté à la matière contenant du titane.
